# EUROPEAN PATENT APPLICATION

(11) **EP 4 071 878 A1**
(43) Date of publication of application: **12.10.2022**
(21) Application number: 19954796.9
(22) Date of filing: 02.12.2019
(51) Int. Cl.: H01M 10/058

(54) **BATTERY PACK AND BATTERY CELL**

(71) Applicant: Hefei Gotion High-Tech Power Energy Co., Ltd., Hefei, Anhui 230012 (CN)
(72) Inventor: CHENG, Qian, Hefei, Anhui 230012 (CN); ZHANG, Ya, Hefei, Anhui 230012 (CN); CAI, Steven, Hefei, Anhui 230012 (CN); LI, Chen, Hefei, Anhui 230012 (CN)
(74) Representative: Novagraaf Technologies
(86) International application number: PCT/CN2019/122334
(87) International publication number: WO 2021/108947

(57) **Abstract**

The invention provides a battery pack and a battery cell. The battery pack includes a plurality of battery cells, wherein two adjacent battery cells in the plurality of battery cells are connected to each other by a conductive adhesive layer, and each battery cell includes a cathode collector, a cathode layer, a separator, an anode layer and an anode collector which are stacked in a thickness direction; and the plurality of battery cells are sequentially stacked in the thickness direction to form the battery pack, and the battery pack is able to form a current channel in the thickness direction when charged or discharged; wherein the conductive adhesive layer is provided with two opposite main surfaces, one main surface being connected to the cathode collector of one battery cell in the two adjacent battery cells, and the other main surface being connected to the anode collector of the other battery cell in the two adjacent battery cells. According to the battery pack provided by the invention, a current merely flows in the thickness direction of the battery pack, such that a uniform current density is obtained on an electrode surface during charging and discharging, local overheating does not occur, and the battery pack is suitable for being rapidly charged or discharged at a large operating current.

## Description

### Technical Field

The invention relates to the technical field of lithium ion secondary batteries, in particular to a battery pack and a battery cell.

### Background

In recent years, lithium-ion batteries have become the most important power source of new energy vehicles. Popularity of electric vehicles drives constant pursuit of maximum driving mileage, charging speed, lower cost, etc. from customers. In order to increase the driving mileage of the electric vehicles, the industry is still pursuing a higher energy density of the lithium-ion batteries. However, compared with increase of an energy density of a single lithium-ion battery, increase of an energy density of the entire battery pack can better satisfy the requirements on battery pack design from the electric vehicles under the condition of ensuring safety.

In current design, a plurality of battery cells are generally combined to form a battery module, and then packaged to form the battery pack, which increases design complexity and reduces space utilization rates of the battery pack, and cannot maximize the energy density of the battery pack.

### Summary

Some embodiments of the invention provide a battery pack and a battery cell, which may maximize a volume energy density of the battery pack. With design of stacking single battery cells in series, uniform current density may be obtained on an electrode surface during charging and discharging, and the battery pack is suitable for being rapidly discharged at a large current. A technical solution is provided as follows:
a battery pack includes a plurality of battery cells, wherein two adjacent battery cells in the plurality of battery cells are connected to each other by a conductive adhesive layer, and each battery cell includes a cathode collector, a cathode layer, a separator, an anode layer and an anode collector which are stacked in a thickness direction; and
the plurality of battery cells are sequentially stacked in the thickness direction to form the battery pack, and the battery pack is able to form a current channel in the thickness direction when charged or discharged;
wherein the conductive adhesive layer is provided with two main surfaces which are opposite, one main surface in the two main surfaces being connected to the cathode collector of one battery cell in the two adjacent battery cells, and the other main surface being connected to the anode collector of the other battery cell in the two adjacent battery cells.

In some embodiments, two ends in a thickness direction of the battery pack are provided with the cathode collector and the anode collector which are opposite to each other, wherein the cathode collector is provided with a first end face away from the conductive adhesive layer, the anode collector is provided with a second end face away from the conductive adhesive layer, the battery pack is provided with a battery pack side face enclosed between the first end face and the second end face, and a packaging layer is laid on the battery pack side face.

In some embodiments, the cathode collector and the anode collector of each battery cell are provided with non-conductive substrates, each substrate is provided with a horizontal direction perpendicular to a thickness direction of the each substrate, the cathode collector is provided with a plurality of first conductive paths at intervals in the horizontal direction of the substrate, and the anode collector is provided with a plurality of second conductive paths at intervals in the horizontal direction of the substrate.

In some embodiments, an area of the anode collector and an area of the cathode collector of each battery cell are greater than 0.25 m².

In some embodiments, the conductive adhesive layer comprises a resin material and conductive particles.

In some embodiments, the separator includes a body layer, the body layer being provided with two surfaces which are opposite; and adhesive layers separately arranged on the two surfaces of the body layer, predetermined adhesion force being provided between one adhesive layer in the adhesive layers and the cathode layer and between the other adhesive layer in the adhesive layers and the anode layer.

In some embodiments, the predetermined adhesion force is greater than 80 N/m.

A battery cell includes:
a cathode collector, a cathode layer, a separator, an anode layer and an anode collector which are sequentially stacked in a thickness direction; where
the cathode collector is provided with a first surface and a second surface which are opposite each other;
the anode collector is provided with a third surface and a fourth surface which are opposite each other, the fourth surface being face to the second surface;
the cathode layer is arranged on the second surface;
the anode layer is arranged on the fourth surface;
the separator is fixed between the cathode layer and the anode layer; and the battery cell is able to form a current channel in the thickness direction when charged or discharged.

In some embodiments, the cathode collector and the anode collector are provided with non-conductive substrates, each substrate is provided with a horizontal direction perpendicular to a thickness direction of the each substrate, and the cathode collector is provided with a plurality of first conductive paths at intervals in the horizontal direction of the substrate, the first conductive paths extending from the first surface to the second surface in the thickness direction; and the anode collector is provided with a plurality of second conductive paths at intervals in the horizontal direction of the substrate, the second conductive paths extending from the fourth surface to the third surface in the thickness direction.

In some embodiments, the battery cell comprises a first adhesion layer which is conductive and is disposed on the first surface of the cathode collector, and a second adhesion layer which is conductive and is disposed on the third surface of the anode collector.

In some embodiments, the separator includes a body layer, the body layer being provided with two surfaces which are opposite; and the adhesive layers separately arranged on the two surfaces of the body layer, predetermined adhesion force being provided between one adhesive layer in the adhesive layers and the cathode layer and between the other adhesive layer in the adhesive layers and the anode layer.

Some embodiments of the invention have the beneficial effects:
the battery pack is designed to be formed by stacking the battery cells in series, the battery pack may output a high voltage. By using the series-stacking design manner, the current channel may merely be formed in the thickness direction of the battery pack, the uniform current density may be obtained on the electrode surface during charging and discharging, the local overheating does not occur, and the battery pack is suitable for being quickly charged or discharged at the large operating current. In addition, through the compact design of stacking the battery cells in series, space utilization may be maximized, and the volume energy density of the battery pack may be maximized. According to the battery cell provided by the embodiment of the invention, an electrode tab is omitted, and even lower current densities are obtained on the surface of the collector at the same current, such that the problems of uneven current distribution and uneven heat distribution are avoided.

### Brief Description of the Drawings

Fig. 1 is a structural schematic diagram of a battery pack provided by an embodiment of the invention;
Fig. 2 is a structural schematic diagram of a battery cell provided by an embodiment of the invention; and
Fig. 3 is a structural schematic diagram of battery cell packaging provided by an embodiment of the invention.

Description of reference numerals:
1. cathode collector; 2. cathode layer; 3. anode layer; 4. anode collector; 5. separator; 6. packaging layer; 7. conductive adhesive layer; and 10. battery cell.

### Detailed Description of the Embodiments

A technical solution of the invention will be described in detail below with reference to accompanying drawings and specific embodiments. It should be understood that these embodiments are merely used to describe the invention rather than to limit the scope. After reading the invention, modifications in various equivalent forms of the invention by those skilled in the art shall fall within the scope defined by the appended claims of the invention.

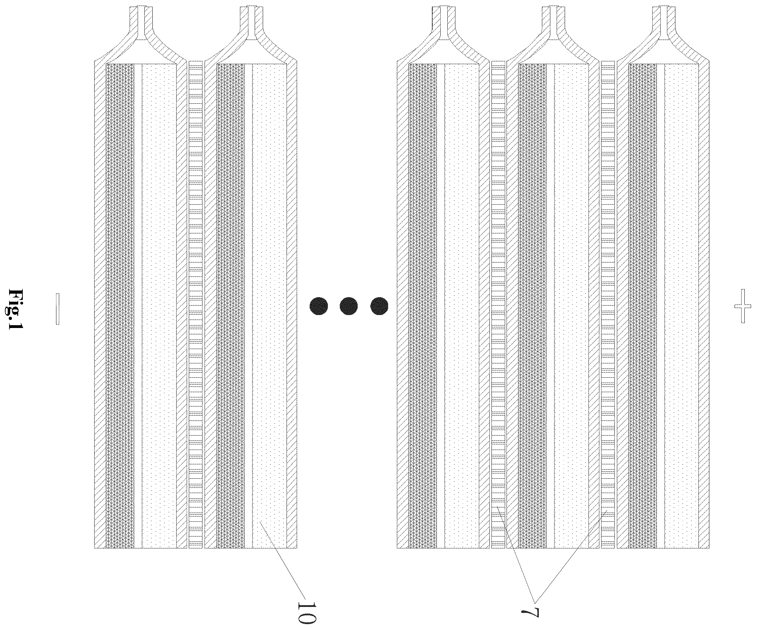

A battery cell and a battery pack of the embodiment of the invention will be explained and described below with reference to Figs. 1 to 3. It should be noted that, for the convenience of description, in the embodiments of the invention, the same reference numerals refer to the same parts. For the sake of brevity, detailed descriptions of the same parts are omitted in different embodiments, and descriptions of the same components may be mutually referred to and quoted.

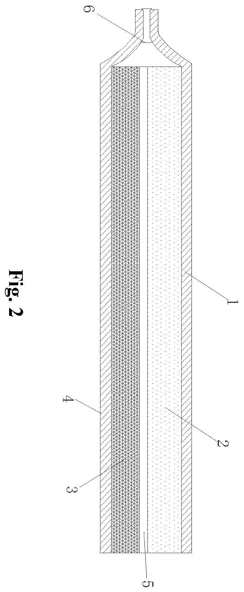

With reference to Figs. 1 and 2, the embodiment of the invention provides the battery pack. The battery pack includes a plurality of battery cells 10, wherein two adjacent battery cells 10 in the plurality of battery cells are connected by a conductive adhesive layer 7, and each battery cell 10 includes a cathode collector 1, a cathode layer 2, a separator 5, an anode layer 3 and an anode collector 4 which are stacked in a thickness direction; and the plurality of battery cells 10 are sequentially stacked in the thickness direction to form the battery pack, and the battery pack is able to form a current channel in the thickness direction when charged or discharged; wherein the conductive adhesive layer 7 is provided with two main surfaces which are opposite, one main surface in the two main surfaces being connected to the cathode collector 1 of one battery cell 10 in the two adjacent battery cells , and the other main surface in the two main surfaces being connected to the anode collector 4 of the other battery cell 10 in the two adjacent battery cells.

In some embodiments, the battery pack is formed by sequentially stacking the plurality of battery cells 10 in series. In order to reduce electrical impedance of an interface between the two adjacent battery cells 10 and maintain mechanical properties of the whole battery pack, each single battery cell 10 is assembled by the conductive adhesive layer 7, and may be electrically and mechanically connected.

The conductive adhesive layer 7 is provided with the two main surfaces which are opposite, one main surface in the two main surfaces being connected to the cathode collector 1 of one battery cell 10, and the other main surface being connected to the anode collector 4 of the other battery cell 10. With reference to Fig. 1, the battery pack structure is shown, the conductive adhesive layer 7 is located between two adjacent battery cells 10, and is used to be connected to the cathode collector 1 and the anode collector 4 of the two adjacent battery cells 10, the cathode collector 1 and the anode collector 4 of the two adjacent battery cells 10 are not located on the same battery cell 10, the cathode collector 1 is a collector of a lower layer of battery cell 10 or an upper layer of battery cell 10 connected to one main surface of the conductive adhesive layer 7, and the anode collector 4 is a collector of an upper layer of battery cell 10 or a lower layer of battery cell 10 connected to the other main surface of the conductive adhesive layer 7. By taking the direction shown in Fig. 1 as an example, one main surface of the conductive adhesive layer 7 is used to be connected to the anode collector 4 of the upper layer of battery cell 10, and the other main surface of the conductive adhesive layer 7 is used to be connected to the cathode collector 1 of the lower layer of battery cell 10, thus achieving series connection of the two adjacent battery cells 10. It is worth noting that definitions of directions of "upper layer" and "lower layer" in the specification are merely for the convenience of description of the technical solution of the invention, and are not limited to directions of the battery pack in the embodiment of the invention in other scenes, including but not limited to use, testing, transportation, manufacturing, etc., which may cause an orientation to be reversed or a position to be changed.

In some embodiments, the conductive adhesive layer 7 includes resin material and conductive particles, the conductive particles may be in the form of carbon black, carbon nanotubes, graphene, etc., or nano or micro metal particles (such as Ni, Pt, Au, Ti and SUS, etc.) which are not alloyed with lithium ions, and may also include one or more filler metal particles. The resin portion of the conductive adhesive layer 7 may be acrylic resin, butyl rubber, high-content ethylene vinyl acetate (EVA) and styrene block copolymers. The resin portion may also be formulated as a special tackifier based on hot melt pressure sensitive adhesives (PSA), natural rubber, nitrile rubber, silicone rubber and MQ silicate resin, and the tackifier is formed by reacting between monofunctional trimethylsilane ("M") and tetrafunctional silicon tetrachloride ("Q"). In some embodiments, the thickness of the conductive adhesive layer 7 is less than 20 µm.

The battery pack is designed to be formed by stacking single battery cells 10 in series, which may maximize a volume energy density of the battery pack. Therefore, the number of battery cells to be connected in series may be determined according to a designed voltage of the battery pack. For example, if LiFePO₄ (LFP) battery cells (an average voltage of 3.2 V) are used, a battery pack of 800 V needs 250 battery cells vertically connected in series. An upper surface of a collector of an uppermost layer of battery cell 10 may be used as a cathode of the whole battery pack, and a lower surface of a collector of a lowermost layer of battery cell 10 may be used as an anode of the whole battery pack.

As shown in Fig. 2, each single battery cell 10 includes the cathode collector 1 and the anode collector 4. The cathode collector 1 and the anode collector 4 are used to converge a current generated by active materials of the battery, so as to form a larger externally-output current. In some embodiments, the cathode collector 1 and the anode collector 4 may be made from metal foil, such as copper foil and aluminum foil. In some embodiments, the cathode collector 1 and the anode collector 4 may also be made of stainless steel. In some embodiments, the cathode collector 1 and the anode collector 4 may also be conductive polymer collectors mixed with conductive particles and resin material.

In some embodiments, a thickness of the anode collector and a thickness of the cathode collector are both less than 20 µm. In some embodiments, the thicknesses are less than 15 µm, and in some embodiments, less than 10 µm.

In some embodiments, the cathode collector 1 of the battery cell 10 is provided with a first surface and a second surface which are opposite to each other. The first surface and the second surface are two main surfaces of the cathode collector 1, and the cathode layer 2 of the battery cell 10 is arranged on the second surface. The anode collector 4 is provided with a third surface and a fourth surface which are opposite to each other. The third surface and the fourth surface are two main surfaces of the anode collector 4, and the anode layer 3 of the battery cell 10 is arranged on the fourth surface. That is, the first surface of the cathode collector 1 forms the cathode of the single battery cell 10, and the third surface of the anode collector 4 forms the anode of the single battery cell 10.

When the plurality of battery cells 10 are sequentially stacked to form the battery pack, the first surface of the cathode collector 1 of the uppermost layer of the battery cell 10 of the battery pack serves as a cathode of the whole battery pack, and the third surface of the anode collector 4 of the lowermost layer of the battery cell 10 serves as an anode of the whole battery pack, wherein the first surface of the cathode collector 1 of the uppermost layer of the battery cell 10 and the third surface of the anode collector 4 of the lowermost layer of the battery cell 10 form two end faces of the battery pack.

In the battery pack provided by the embodiment of the invention, two ends in the thickness direction of the battery pack are provided with the cathode collector 1 and the anode collector 4 arranged opposite to each other, wherein the cathode collector 1 serves as the cathode of the whole battery pack and the anode collector 4 serves as the anode of the whole battery pack. The cathode collector 1 is provided with a first end face away from the conductive adhesive layer 7, and the anode collector 4 is provided with a second end face away from the conductive adhesive layer 7. The first end face and the second end face are defined as the two end faces of the battery pack. The battery pack is provided with a battery pack side face enclosed between the first end face and the second end face, and a packaging layer 6 is laid on the battery pack side face, thus forming the complete battery pack.

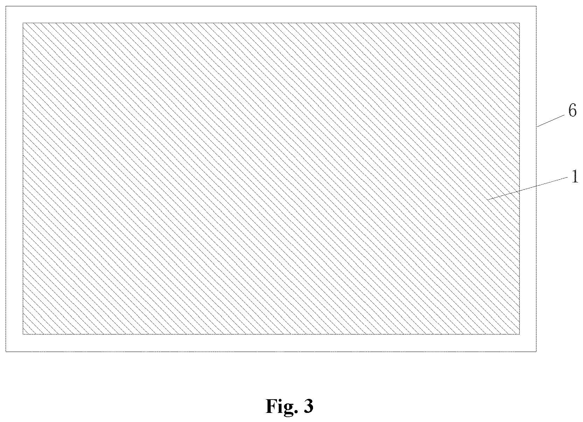

As shown in Figs. 2 and 3, the battery cell 10 is provided with the battery cell 10 side face enclosed between the first surface of the cathode collector 1 and the third surface of the anode collector 4, and the packaging layer 6 is arranged on the battery cell 10 side face.

In some embodiments, the packaging layer 6 is arranged on each single battery cell 10. The first surface of the cathode collector 1 and the third surface of the anode collector of the single battery cell 10 are defined as two end faces of the battery cell 10, and a surface between the two end faces of the battery cell 10 forms the battery cell side face. The battery cell 10 side face may be flush with a side face of the cathode layer 2, a side face of the separator 5, and a side face of the anode layer 3, that is, the cathode collector 1, the cathode layer 2, the separator 5, the anode layer 3, and the anode collector 4 overlap one another completely when projected in the thickness direction of the battery cell 10. Alternatively, the battery cell 10 side face may cover the side face of the cathode layer 2, the side face of the separator 5, and the side face of the anode layer 3. As shown in Fig. 3, the packaging layer 6 covers the battery cell 10 side face. In some embodiments, the packaging layer 6 is a cast polypropylene (CPP) film, which is laminated on the side face of the battery cell 10 through hot pressing.

One main surface of the collector is coated with each of the cathode layer 2 and the anode layer 3 of the battery cell 10 in a single-sided coating method, that is, the second surface of the cathode collector 1 is coated with the cathode layer in a single-sided coating method, and the fourth surface of the anode collector 4 is coated with the anode layer 3 in a single-sided coating method.

In some embodiments, the single battery cell 10 may form a size of the battery pack, that is a capacity (Ah) of the whole battery pack is a capacity of the single battery cell 10, such that internal space of the battery pack is more effectively utilized. Therefore, the first surface of the cathode collector 1 of the single battery cell 10 serves as the cathode of the battery pack, and the third surface of the anode collector 4 in the single battery cell 10 serves as the anode of the battery pack.

In some embodiments, an area of the cathode collector 1 and an area of the anode collector 4 of the battery cell 10 are greater than 0.25m², which are much greater than that of current battery cells or pouch cells with sizes of PHEV2 and EV2, such that an energy density of the battery cell is>200 Wh/kg (LFP) and an energy density of the battery cell is>290 Wh/kg (NCM/NCA).

The cathode layer 2 includes one or more cathode materials of lithium as cathode active materials, such as lithium-containing compounds: LiFePO4 (LFP), lithium nickel manganese cobalt oxide (NCM), nickel cobalt lithium aluminate (NCA), lithium manganese nickel oxide (LNMO) or a mixture of two or more of them. In addition to the above cathode active material, in some embodiments, the cathode layer 2 may also include other materials, such as an adhesive and a conductive material, as required. The conductive material may include a carbon material, such as graphite and carbon black, and may use one solely or more, in the form of a mixture of the carbon materials. The conductive material may also be a metal material, a conductive polymer or the like, as long as the material has a conductive function. In some embodiments, the method for coating the second surface of the cathode collector 1 with the cathode layer 2 may include: coating one main surface of the cathode collector 1 with a slurry composed of the cathode active material, the conductive material and the adhesive dissolved or dispersed in a solvent, evaporating the solvent, and rolling a dried solid substrate to a prescribed thickness.

In some embodiments, the cathode layer 2 may not include the adhesive, and the conductive material may be a suspension in a non-aqueous liquid electrolyte. An adhesive used in traditional electrodes may hinder a pore structure of the electrodes, thus reducing or completely hindering ions from flowing to the active material and reducing ion conductivity of the electrodes. The conductive material may be a suspension of an electronic conductive material (for example, carbon, metal materials, etc.) in the non-aqueous liquid electrolyte, thereby forming semi-solid slurry. Then, the second surface of the cathode collector 1 is coated with the semi-solid slurry in a one-sided coating method to form a semi-solid electrode. The semi-solid electrode omits a step of evaporating a solvent (water or n-methylpyrrolidone (NMP)) in a traditional method, and the semi-solid electrode is made into an electrode with a great thickness and higher active material loads, thus significantly increasing a total charge capacity and energy density of the battery cell 10.

The anode layer 3 includes graphite, silicon-carbon mixture, SiOx, SnOx, FeOx or their mixture as an anode active material. In addition to the above anode active material, in some embodiments, the anode layer 3 may also include other materials, such as an adhesive and a conductive material, as required. In some embodiments, the conductive material includes a carbon material, such as graphite and carbon black, and may use one solely or more, in the form of a mixture of the carbon materials. The conductive material may also be a metal material, a conductive polymer or the like, as long as the material has a conductive function. In some embodiments, the method for coating the fourth surface of the anode collector 4 with the anode layer 3 may include: coating one main surface of the anode collector 4 with a slurry composed of the anode active material, the conductive material and the adhesive dissolved or dispersed in a solvent, evaporating the solvent, and rolling a dried solid substrate to a prescribed thickness.

In some embodiments, the anode layer 3 may not include the adhesive, and the conductive material may be a suspension in a non-aqueous liquid electrolyte. An adhesive used in traditional electrodes may hinder a pore structure of the electrodes, thus reducing or completely hindering ions from flowing to the active material and reducing ion conductivity of the electrodes. The conductive material may be a suspension of an electronic conductive material (for example, carbon, metal materials, etc.) in the non-aqueous liquid electrolyte, thereby forming semi-solid slurry. Then, the fourth surface of the anode collector 4 is coated with the semi-solid slurry in a one-sided coating method to form a semi-solid electrode. The semi-solid electrode omits a step of evaporating a solvent (water or n-methylpyrrolidone (NMP)) in a traditional method, and the semi-solid electrode is made into an electrode with a great thickness and higher active material loads, thus significantly increasing a total charge capacity and energy density of the battery cell 10.

In a structure of the battery cell shown in Fig. 2, the cathode collector 1 and the separator 5 are spaced and at least partially define a cathode active region, and the cathode layer 2 is arranged in the cathode active region. The anode collector 4 and the separator 5 are spaced and at least partially define an anode active region, and the anode layer 3 is arranged in the anode active region.

In some embodiments, the cathode layer 2 includes: a suspension of the cathode active material and a first conductive material in a first non-aqueous liquid electrolyte. The anode layer 3 includes: a suspension of the anode active material and a second conductive material in a second non-aqueous liquid electrolyte. In some embodiments, the cathode layer 2 includes about 35% to about 75% by volume of the cathode active material and about 0.5% to about 8% by volume of the first conductive material. The anode layer 3 includes about 35% to about 75% by volume of the anode active material, and about 0.5% to about 8% by volume of the second conductive material. The active material and the conductive material co-suspend in the electrolyte to prepare the semi-solid electrode. The concept of "semi-solid" refers to a mixture of liquid phases and solid phases, such as particle suspensions, colloidal suspensions, emulsions, gel or micelle.

The separator 5 is arranged between the cathode layer 2 and the anode layer 3. The separator 5 is used to separate the cathode layer 2 from the anode layer 3 to prevent short circuits. In some embodiments, the separator 5 may be a porous polymer film with an injected liquid electrolyte, and allows ions to reciprocate between active materials in the electrode and prevent electron transfer. In some embodiments, the separator 5 may be a microporous film, which prevents particles in the cathode and the anode from passing through the film. In short, the separator 5 may be any kind of film which may transport ions.

In this embodiment, the separator 5 includes a body layer, the body layer being provided with two surfaces which are opposite; and adhesive layers separately arranged on the two surfaces of the body layer, predetermined adhesion force being provided between the adhesive layer on one surface of the two surfaces and the cathode layer 2 and between the adhesive layer on the other surface of the two surfaces and the anode layer 3. The predetermined adhesion force is greater than 80 N/m, in some embodiments, greater than 100 N/m.

In some embodiments, the body layer may be a polyethylene (PE) film or a polypropylene (PP)-based polyolefin diaphragm. The adhesive layers are separately arranged on the two surfaces of the body layer, such that an adhesion strength between the separator 5 and the cathode layer 2 and an adhesion strength between the separator and the anode layer 3 may be guaranteed. In some embodiments, the adhesive layer is polyvinylidene fluoride (PVDF), and may significantly improve adhesion force between the separator 5 and each of the adjacent cathode material and anode material, thus guaranteeing that the battery cell 10 does not need external pressure during charging and discharging.

In this embodiment, the cathode collector 1 and the anode collector 4 are provided with non-conductive substrates, each substrate is provided with a horizontal direction perpendicular to a thickness direction of the substrate, and the cathode collector 1 is provided with a plurality of first conductive paths at intervals in the horizontal direction of the substrate, the first conductive paths extending from the first surface of the cathode collector 1 to the second surface of the cathode collector 1 in the thickness direction; and the anode collector 4 is provided with a plurality of second conductive paths at intervals in the horizontal direction of the substrate, the second conductive paths extending from the fourth surface of the anode collector 4 to the third surface of the anode collector 4 in the thickness direction.

In some embodiments, the cathode collector 1 and the anode collector 4 may be polymer collectors provided with conductive fillers. Since the collector is in direct contact with the active material, the collector material may not perform an electrochemical reaction with lithium ions. The cathode collector 1 and the anode collector 4 have substrates of polyolefin materials, such as copolymers or mixtures of high density polyethylene, low density polyethylene, polypropylene, polybutene, polymethylpentene, etc. Compared with a traditional metal collector, a density of the polymer collector is lower than that of metal, which is conducive to improvement of a weight energy density of the battery pack.

The conductive filler is able to form the conductive path in the collector. The first conductive paths in the cathode collector 1 may be distributed at predetermined intervals, and the first conductive paths extend from the first surface to the second surface in the thickness direction of the collector, such that a desirable conductive network is formed in the thickness direction of the collector, and the current is able to flow along the conductive paths in the thickness direction of the collector. In addition, due to distribution of the first conductive paths at intervals in the substrate of the cathode collector 1, a sufficient conductive network may not be formed in the horizontal direction of the collector. Therefore, when a short circuit occurs or a nail penetration test is performed inside the battery pack, the collector is not prone to activate most active materials in the horizontal direction of the collector, such that thermal runaway is not likely to occur while electricity may be conducted sufficiently in the thickness direction of the collector, and the battery cell 10 and the battery pack may be charged and discharged normally. Similarly, arrangement and conductive principles of the second conductive path in the anode collector 4 are the same as those of the cathode collector 1, and are not repeated in the invention.

In some embodiments, the cathode collector 1 and the anode collector 4 may be formed by combining the conductive filler and the polyolefin material. The conductive filler may be distributed at intervals in the horizontal direction of the collector to form several first conductive paths and several second conductive paths, such that the conductive network may not be formed in the horizontal direction of the collector. In some embodiments, the cathode collector 1 and the anode collector 4 may be provided with the first conductive paths and the second conductive paths respectively which are distributed at intervals through a process after the polyolefin material is compounded with the conductive filler. The conductive filler is in the form of conductive particles, and the conductive particles are any one of the following materials: carbon materials, nano or micro metal particles, and the metal particles may not alloy with the lithium ions. In some embodiments, in the collector, a mass percentage of the conductive particles may be 10-70wt%. The carbon material may be made from carbon nanotubes, carbon black, Ketjen black, graphene, etc., or a mixture of the above materials, such as carbon black+Ketjen black or carbon black+Ketjen black+carbon nanotubes. The nano or micro metal particles may be made from metal such as Ni, Pt, Au, Ti and SUS, which do not alloy with the lithium ions, and may also include one or more filler metal particles.

In this embodiment, impedance of the cathode collector 1 and impedance of the anode collector 4 are lower than 15 mohm/sq. In some embodiments, impedance of the collector is lower than 10 mohm/sq.

In some embodiments, the battery cell 10 includes a first adhesion layer which is conductive and is disposed on the first surface of the cathode collector 1, and a second adhesion layer which is conductive and is disposed on the third surface of the anode collector 4. An outer surface of the collector may be coated with the first adhesion layer and the second adhesion layer through magnetron sputtering and evaporation. The first adhesion layer and the second adhesion layer may be conductive metal coatings such as Ni, Pt, Au and Ti, etc., so as to further improve the conductivity and test voltage, current and temperature data for a battery management system (BMS). In addition, by using metal surface treatment on the outer surface of the collector, external oxygen or moisture may be isolated from inside of the battery cell 10. In some embodiments, a thickness of the first adhesion layer and a thickness of the second adhesion layer are 10 nm or below.

The embodiment of the invention also provides the battery cell 10, as shown in Figs. 1 to 3. The battery cell 10 includes: the cathode layer 1, the cathode layer 2, the separator 5, the anode layer 3 and the anode collector 4 which are sequentially stacked in a thickness direction; wherein the cathode collector 1 is provided with the first surface and the second surface which are opposite to each other; the anode collector 4 is provided with the third surface and the fourth surface which are opposite to each other, the fourth surface faces to the second surface; the cathode layer 2 is arranged on the second surface; the anode layer 3 is arranged on the fourth surface; the separator 5 is fixed between the cathode layer 2 and the anode layer 3; and the battery cell 10 may form the current channel in the thickness direction when charged or discharged.

According to the battery cell provided by the embodiment of the invention, the electrode tab is omitted, a uniform current density may be obtained on the surface of the collector, the current merely flows in the current channel in the thickness direction of the battery cell, a uniform current density may be obtained on the surface of the electrode, local overheating does not occur, and the battery cell is suitable for being quickly charged or discharged at a large operating current.

The battery pack and the battery cell provided by the embodiments of the invention have the following advantages and features:
(1) The battery cell in the invention omits the electrode tab in the collector, such that the problems of uneven current distribution and uneven heat distribution are avoided, and the uniform current density is obtained on the surface of the collector.
(2) According to the invention, the battery pack designed to be formed by stacking the battery cells in series may output a high voltage, in addition, the current merely flows in the thickness direction of the battery pack, the uniform current density may be obtained on the surface of the electrode during charging and discharging, local overheating does not occur, and the battery pack is suitable for being quickly charged or discharged at the large operating current.
(3) The invention uses a collector, which may achieve low conductivity in the horizontal direction and high conductivity in the thickness direction of the collector, thus ensuring the safety of the battery pack. In addition, compared with the traditional collector, the collector used in some embodiments of the invention reduces the weight of the collector and improves the weight energy density of the whole battery pack.
(4) In addition, through the compact design of stacking the battery cells in series, space utilization is maximized, and the volume energy density of the battery pack is maximized.

It should be understood that the above description is used for illustration rather than limitation. By reading the above description, many embodiments and many applications apart from the provided examples will be apparent to those skilled in the art. Therefore, the scope of the teaching should not be determined with reference to the above description, but should be determined with reference to the appended claims and the full range of equivalents owned by these claims. For the purpose of comprehensiveness, all articles and references, including the invention of patent applications and announcements, are incorporated herein by reference. Omission of any aspect of the subject matter disclosed herein in the foregoing claims is not intended to abandon the subject matter, nor should it be considered that the applicant does not consider the subject matter as part of the disclosed application subject matter.

## Claims

1. A battery pack, comprising a plurality of battery cells, wherein two adjacent battery cells in the plurality of battery cells are connected to each other by a conductive adhesive layer, and each battery cell comprises a cathode collector, a cathode layer, a separator, an anode layer and an anode collector which are stacked in a thickness direction; and
the plurality of battery cells are sequentially stacked in the thickness direction to form the battery pack, and the battery pack is able to form a current channel in the thickness direction when charged or discharged;
wherein the conductive adhesive layer is provided with two main surfaces which are opposite, one main surface in the two main surfaces being connected to the cathode collector of one battery cell in the two adjacent battery cells, and the other main surface being connected to the anode collector of the other battery cell in the two adjacent battery cells.

2. The battery pack as claimed in claim 1, wherein two ends in the thickness direction of the battery pack are provided with the cathode collector and the anode collector which are opposite to each other, wherein the cathode collector is provided with a first end face away from the conductive adhesive layer, the anode collector is provided with a second end face away from the conductive adhesive layer, the battery pack is provided with a battery pack side face enclosed between the first end face and the second end face, and a packaging layer is laid on the battery pack side face.

3. The battery pack as claimed in claim 1, wherein the cathode collector and the anode collector of the each battery cell are provided with non-conductive substrates, each substrate is provided with a horizontal direction perpendicular to a thickness direction of the each substrate, the cathode collector is provided with a plurality of first conductive paths at intervals in the horizontal direction of the substrate, and the anode collector is provided with a plurality of second conductive paths at intervals in the horizontal direction of the substrate.

4. The battery pack as claimed in claim 1, wherein an area of the anode collector and an area of the cathode collector of the each battery cell are greater than 0.25 m².

5. The battery pack as claimed in claim 1, wherein the conductive adhesive layer comprises a resin material and conductive particles.

6. The battery pack as claimed in claim 1, wherein the separator comprises:
a body layer, the body layer being provided with two surfaces which are opposite; and
adhesive layers separately arranged on the two surfaces of the body layer, predetermined adhesion force being provided between one adhesive layer in the adhesive layers and the cathode layer and between the other adhesive layer in the adhesive layers and the anode layer.

7. The battery pack as claimed in claim 6, wherein the predetermined adhesion force is greater than 80 N/m.

8. A battery cell, comprising: a cathode collector, a cathode layer, a separator, an anode layer and an anode collector which are sequentially stacked in a thickness direction; wherein
the cathode collector is provided with a first surface and a second surface which are opposite to each other;
the anode collector is provided with a third surface and a fourth surface which are opposite to each other, the fourth surface being face to the second surface;
the cathode layer is arranged on the second surface;
the anode layer is arranged on the fourth surface;
the separator is fixed between the cathode layer and the anode layer; and the battery cell is able to form a current channel in the thickness direction when charged or discharged.

9. The battery cell as claimed in claim 8, wherein the cathode collector and the anode collector are provided with non-conductive substrates, each substrate is provided with a horizontal direction perpendicular to a thickness direction of the each substrate, and the cathode collector is provided with a plurality of first conductive paths at intervals in the horizontal direction of the substrate, the first conductive paths extending from the first surface to the second surface in the thickness direction; and the anode collector is provided with a plurality of second conductive paths at intervals in the horizontal direction of the substrate, the second conductive paths extending from the fourth surface to the third surface in the thickness direction.

10. The battery cell as claimed in claim 9, wherein the battery cell comprises a first adhesion layer which is conductive and is disposed on the first surface of the cathode collector, and a second adhesion layer which is conductive and is disposed on the third surface of the anode collector.

11. The battery cell as claimed in claim 10, wherein the separator comprises a body layer, the body layer being provided with two surfaces which are opposite; and adhesive layers separately arranged on the two surfaces of the body layer, predetermined adhesion force being provided between one adhesive layer in the adhesive layers and the cathode layer and between the other adhesive layer in the adhesive layers and the anode layer.
